# EUROPÄISCHE PATENTANMELDUNG

(11) **EP 1 184 222 A2**
(43) Veröffentlichungstag der Anmeldung: **06.03.2002**
(21) Anmeldenummer: 01113487.1
(22) Anmeldetag: 02.06.2001
(51) Int. Cl.: B60R 1/074

(54) **Vorrichtung zum Bewegen eines Fahrzeugspiegels**

(30) Priorität: 31.08.2000 DE 10042678
(71) Anmelder: Bühler Motor GmbH, 90459 Nürnberg (DE)
(72) Erfinder: Herdt, Peter, 90429 Nürnberg (DE)

(57) **Zusammenfassung**

Der Fahrzeugspiegelantrieb umfaßt ein Zahnrad (6), das mit dem Spiegelfuß (2) verrastbar ist, und das über ein Antriebsgetriebe (11) mit einem Elektromotor gekoppelt ist, sowie eine Druckfeder (8), die sich auf dem Zahnrad (6) abstützt und das Zahnrad (6) in die verrastete Stellung drückt.
- Vorteil:: geringe Gleitreibung

## Beschreibung

Die Erfindung betrifft eine Vorrichtung zum Bewegen eines Körpers, insbesondere eines Fahrzeugteils und vorzugsweise eines Fahrzeugspiegels.

Bei Personenkraftfahrzeugen (Pkw) sind Vorrichtungen zur automatischen Verstellung von dessen Außenspiegel oder Außenspiegeln mittels eines elektrischen Antriebes bekannt. Diese Spiegelverstellvorrichtungen werden mittels einer im Fahrzeuginnern befindlichen Bedieneinrichtung von innen gesteuert. Im allgemeinen sind die Antriebe zur Verstellung des Außenspiegels so ausgelegt, daß der Außenspiegel um zwei Drehachsen gedreht werden kann, um die gewünschten Winkelpositionen relativ zum Fahrzeug einstellen zu können. Bei manchen Modellen ist zusätzlich ein sogenannter Abklappantrieb integriert, der den Außenspiegel mitsamt seinem Gehäuse automatisch über einen zusätzlichen elektrischen Antrieb abklappt, beispielsweise bei Engstellen oder zur Vermeidung von Beschädigungen des Außenspiegels. Aus Sicherheitsgründen ist nun gefordert, daß bei einer Verstellung des Außenspiegels durch Krafteinwirkung von außen der Abklappantrieb mechanisch vom Außenspiegel entkoppelt werden kann.

Aus *DE 198 33 672 A1* ist eine Vorrichtung zum Abklappen eines Kfz-Außenspiegels bekannt, bei der diese Anforderungen wie folgt gelöst werden: In einem gemeinsamen Gehäuse sind ein Getriebenockenrad und ein elektrischer Antriebsmotor gelagert, die über ein Antriebsgetriebe miteinander koppelbar sind. Das Getrieberad ist innen auf einem hohlzylindrischen Radiallager und axial spielfrei im Gehäuse gelagert. Durch das Innere des hohlzylindrischen Radiallagers ist ein mit der Karosserie verbundener Spiegelfuß des Außenspiegels geführt, der an einem dem Getrieberad zugewandten Kupplungsbereich 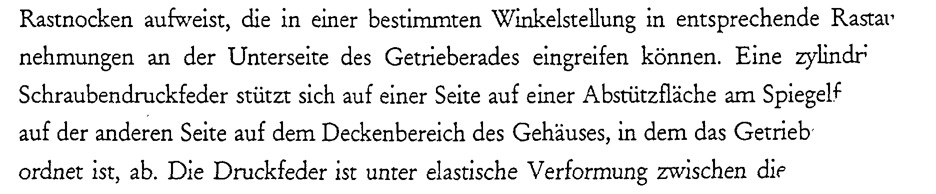 stützflächen eingebracht und übt somit eine Federkraft aus, mit der die Druckfeder das Gehäuse nach unten drückt, so daß das Getrieberad in Kopplung mit dem Kopplungsbereich des Spiegelfußes gehalten wird. Wenn das Antriebsgetriebe nun vom Antriebsmotor angetrieben wird; dreht sich das Antriebsgehäuse um das ortsfeste Getrieberad. Dadurch werden das Spiegelgehäuse, an dem das Antriebsgehäuse mit dem Motor befestigt ist, und der ortsfest zur Karosserie des Kfz befestigte Spiegelfuß gegeneinander verdreht, so daß bei geeigneter Stellung der Drehachse des Antriebs ein Abklappen des Außenspiegels erreicht werden kann. Im allgemeinen sind zur Begrenzung dieser Abklappbewegung noch weitere Anschlagsmittel vorgesehen.

Bei der Drehbewegung gleitet nun jedoch auch die Feder auf dem Deckenbereich des Gehäuses, wodurch Gleitreibungsverluste entstehen. Diese Gleitreibungsverluste haben einen höheren Energiebedarf des elektrischen Antriebsmotors zur Folge. Die Gleitreibung kann zwar etwas vermindert werden, indem eine Gleitscheibe zwischen der Feder und dem Gehäuseoberteil angeordnet wird. Jedoch muß die Federkraft der Druckfeder relativ groß gewählt werden, um Vibrationen und Erschütterungen des Kfz aufzufangen, so daß die in Normalenrichtung zu den Abstützflächen wirkende Federkraft auch bei Verwendung einer Gleitscheibe und der damit niedrigeren Gleitreibungskoeffizienten dennoch eine erhebliche Gleitreibung und Haftreibung verursacht. Ein weiteres Problem besteht dann, wenn das Gehäuseoberteil mit dem Deckenbereich aus Kunststoff gebildet wird und durch die sich darauf abstützende Druckfeder einer Biegebeanspruchung auf Dauer ausgesetzt ist.

Der Erfindung liegt nun die Aufgabe zugrunde, eine Vorrichtung zum Bewegen eines Körpers, insbesondere eines Fahrzeugteils und vorzugsweise eines Fahrzeugspiegels, anzugeben, bei der gegenüber dem genannten Stand der Technik Gleitreibungsverluste reduziert sind.

Diese Aufgabe wird gemäß der Erfindung gelöst mit den Merkmalen des Anspruchs 1.

Die Vorrichtung zum Bewegen eines Körpers, insbesondere eines Fahrzeugteils und vorzugsweise eines Fahrzeugspiegels, umfaßt
a) ein Antriebsteil,
b) ein Getriebeteil und
c) wenigstens ein Federelement,
wobei
d) das Getriebeteil an ein Antriebsgetriebe angekoppelt oder ankoppelbar ist, und das Getriebeteil und das Antriebsgetriebe im angekoppelten Zustand relativ zueinander um eine Drehachse drehbar sind,
e) das Getriebeteil und das Antriebsteil in einer gekoppelten Stellung mechanisch derart gekoppelt sind, daß auch bei einer Drehung des Getriebeteils und des Antriebsgetriebes relativ zueinander oder bei Ausübung eines Drehmoments des Antriebsgetriebes auf das Getriebeteil das Antriebsteil ortsfest zum Getriebeteil ist, und in einer entkoppelten Stellung mechanisch entkoppelt, also gegeneinander verdrehbar, sind,
   und
f) das Federelement auf einem Abstützbereich des Getriebeteils oder auf einem sich auf dem Getriebeteil abstützenden Abstützkörper abgestützt ist und eine Rückstellkraft auf das Getriebeteil ausübt, die das Getriebeteil und das Antriebsteil in die gekoppelte Stellung drückt.

Die Erfindung beruht, ausgehend vom genannten Stand der Technik *DE 198 33 672 A1*, auf der Überlegung, das beim Stand der Technik vorgesehene Gehäuse zumindest in dem zwischen der Druckfeder (Federelement) und dem Getriebeteil vorgesehenen Bereich wegzulassen und die Druckfeder unmittelbar auf das Getriebeteil aufzusetzen. Dadurch wirkt die Federkraft der Druckfeder unmittelbar auf das Getriebeteil, so daß auch ohne Gehäuse das Getriebeteil und das Antriebsteil (Spiegelfuß) zur gegenseitigen Kopplung durch die Federkraft gegeneinander gedrückt werden. Im Gegensatz zum Stand der Technik hat dies nun zur Folge, daß bei der Drehbewegung entweder des Getriebeteils oder alternativ des Antriebsgetriebes sich sowohl das Antriebsteil als auch das Federelement im ersten Fall mit dem Getriebeteil mitdrehen bzw. im zweiten Fall nicht mitdrehen, wenn das Getriebeteil und das Antriebsteil in der gekoppelten Stellung sind. Dadurch tritt keine Relativbewegung zwischen der Druckfeder und dem Getriebeteil mehr auf, so daß zwischen diesen beiden Teilen praktisch keine Gleitreibungsverluste mehr entstehen. Die gekoppelte Stellung von Antriebsteil und Getriebeteil ist die Normalstellung, die dem automatischen Antrieb des Körpers entspricht. Nur in der entkoppelten Stellung, die einem Sonderfall entspricht, kann nun eine Relativbewegung zwischen dem Federelement und dem Getriebeteil auftreten, bei der Gleitreibungsverluste entstehen können. Diese Gleitreibungsverluste sind aber für den elektrischen Antriebsmotor nicht belastend, da in der entkoppelten Stellung der Elektromotor nicht den zu bewegenden Körper bewegen muß.

Weitere Vorteile der Maßnahmen gemäß der Erfindung bestehen darin, daß keine Tangentialkräfte an der Druckfeder auftreten und somit eine Materialbeanspruchung der Druckfeder verringert wird. Schließlich wird auch in Gegensatz zur *DE 198 33 672 A1* auf das Gehäuse kein Federdruck mehr ausgeübt, so daß das Gehäuse, sofern es vorhanden ist, auch ohne weiteres aus Kunststoff oder einem mechanisch weniger belastbaren Material als einem Metall bestehen kann.

Unter dem Begriff Federelement ist gemäß der Erfindung neben einer eigentlichen Feder auch jedes Element (Druckaktor) zu verstehen, das einen Druck oder eine Kraft auf das Getriebeteil ausüben kann, der oder die auch wieder aufgehoben werden kann, z.B. hydraulische oder pneumatische Druckaktoren oder Längenausdehnungselemente.

Vorteilhafte Ausgestaltungen und Weiterbildungen der Vorrichtung gemäß der Erfindung ergeben sich aus den vom Anspruch 1 abhängigen Ansprüchen.

In einer ersten vorteilhaften Ausführungsform der Vorrichtung weist das Antriebsteil einen Kopplungsbereich und einen Abstützbereich auf und das Getriebeteil einen an das Antriebsgetriebe angekoppelten oder ankoppelbaren Getriebebereich und ebenfalls einen Kopplungsbereich. Das Federelement ist nun auf dem Abstützbereich des Antriebsteils einerseits und auf dem Abstützbereich des Getriebeteils oder des Abstützkörpers andererseits abgestützt und übt eine axial zur Drehachse gerichtete Rückstellkraft auf beide Abstützbereiche aus. Das Getriebeteil und das Antriebsteil sind relativ zueinander axial zur Drehachse (als Verschieberichtung) verschiebbar und die Kopplungsbereiche von Getriebeteil und Antriebsteil sind in der gekoppelten Stellung mechanisch gekoppelt und in der entkoppelten Stellung, die von der gekoppelten Stellung durch eine axiale, also koaxial oder parallel zur Drehachse gerichtete, Relativbewegung der Kopplungsbereiche voneinander weg erreicht wird, entkoppelt.

Die Kopplung von Antriebsteil und Getriebeteil wird vorzugsweise axial in Eingriff bringbare und lösbare Kopplungsmittel bewerkstelligt. Diese Kopplungsmittel bewirken zweckmäßigerweise eine formschlüssige und/oder kraftschlüssige Kopplung von Antriebsteil und Getriebeteil. In einer bevorzugten Ausführung umfassen die Kopplungsmittel wenigstens einen Vorsprung oder Fortsatz und wenigstens eine korrespondierende Ausnehmung oder Öffnung.

Das Federelement ist in einer besonderen Weiterbildung am oder auf dem Antriebsteil radial gelagert. Vorzugsweise ist das Federelement eine Schrauben- oder Spiralfeder, insbesondere eine zylindrische Schrauben- oder Spiralfeder.

In einer besonders vorteilhaften Ausführungsform umfaßt die Vorrichtung eine Lagereinrichtung, in der das Getriebeteil gelagert ist, insbesondere über ein, vorzugsweise radial zur Drehachse außerhalb des Getriebeteils angeordnetes, Radiallager. Die Lagereinrichtung weist in einer zweckmäßigen Ausgestaltung ein Drehlager für das Getriebeteil auf, vorzugsweise wenigstens ein Kugellager oder Rollenlager oder Gleitlager, so daß die Lagereinrichtung und das Getriebeteil relativ zueinander um die Drehachse drehbar sind. Das Antriebsgetriebe ist dann ortsfest an oder in der Lagereinrichtung angeordnet. Das Drehlager begrenzt vorzugsweise auch die axiale Bewegung des Getriebeteils zum Antriebsteil in der gekoppelten Stellung.

Besonders vorteilhaft ist die Ausbildung der Lagereinrichtung mit einem das Getriebeteil um die Drehachse umgebenden Gehäuse, das axial an beiden Stirnseiten wenigstens teilweise offen ist, so daß das Getriebeteil zur Kopplung für das Antriebsteil und im Abstützbereich für das Federelement zugänglich ist. Da das Gehäuse nicht von der Federkraft des Federelements direkt belastet ist, kann das Gehäuse auch aus einem Kunststoff bestehen.

Die Vorrichtung umfaßt insbesondere auch das Antriebsgetriebe, das an den Getriebebereich des Getriebeteils gekoppelt ist oder koppelbar ist, und vorzugsweise auch einen Antriebsmotor zum Antreiben des Antriebsgetriebes. Die Lagereinrichtung trägt nun vorteilhafterweise auch das Antriebsteil und/oder das Antriebsgetriebe und/oder den Antriebsmotor.

Das Getriebeteil kann insbesondere ein Getrieberad oder eine Getriebewalze oder eine Getriebeschnecke sein und/oder im Getriebebereich mehrere Getriebenocken oder Getriebezähne aufweisen.

In einer besonderen Anwendung umfaßt ein Fahrzeugspiegelsystem einen Fahrzeugspiegel und eine Vorrichtung gemäß der Erfindung zum Bewegen, insbesondere Abklappen, des Fahrzeugspiegels.

Es kann nun das Antriebsteil oder auch das Antriebsgetriebe bzw. die Lagereinrichtung Teil des Fahrzeugspiegels sein oder mit diesem verbunden sein.

Antriebsteil und Getriebeteil sind im allgemeinen bei einer automatischen Verstellung des Fahrzeugspiegels (Normalbetrieb) in der gekoppelten Stellung und nur bei einer vorgegebenen Stoß- oder Krafteinwirkung von außen auf den Fahrzeugspiegel in der entkoppelten Stellung.

Die Erfindung wird im folgenden anhand von Ausführungsbeispielen weiter erläutert. Dabei wird auf die Zeichnung Bezug genommen, in deren
- FIG 1: eine Vorrichtung zum Bewegen eines Körpers gemäß der Erfindung in einer Schnittdarstellung,
- FIG 2: die Bewegungvorrichtung gemäß FIG 1 in einer teilweise perspektivischen Draufsicht,
- FIG 3: eine Vorrichtung zum Bewegen eines Körpers gemäß dem Stand der Technik in einer Explosionsdarstellung und
- FIG 4: die Bewegungsvorrichtung gemäß FIG 3 nach dem Stand der Technik in einer Schnittdarstellung
jeweils schematisch veranschaulicht sind. Einander entsprechende Teile sind in den FIG 1 bis 4 mit denselben Bezugszeichen versehen.

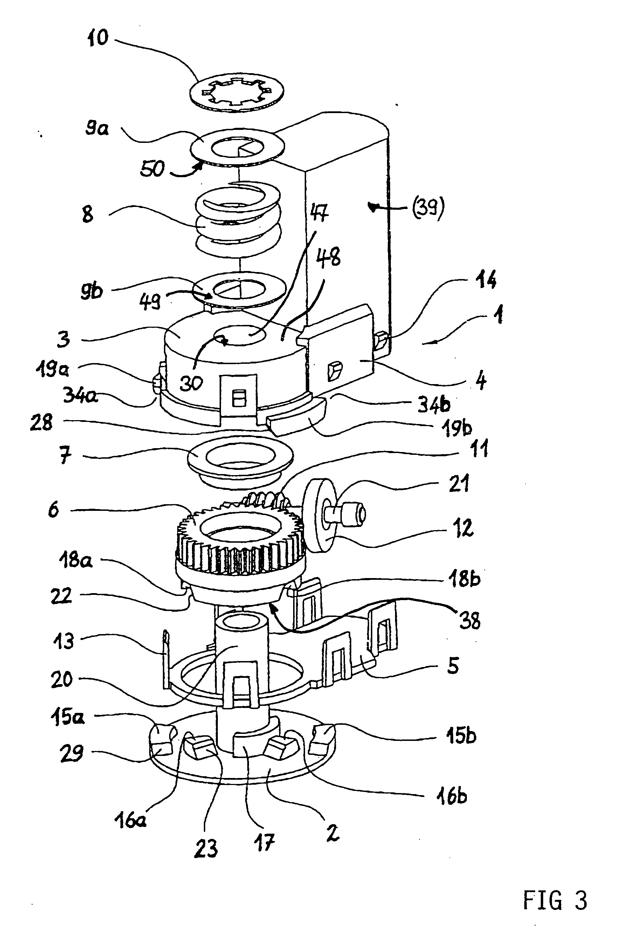

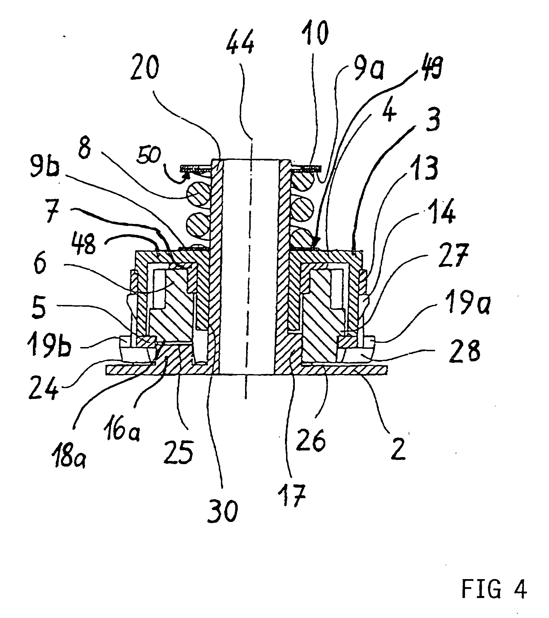

Die FIG 3 und 4 sind der *DE 198 33 672 A1 entnommen* und veranschaulichen den Stand der Technik, von dem die vorliegende Erfindung ausgeht. Bei der Beschreibung der bekannten Ausführungsform gemäß der FIG 3 und 4 werden dieselben Bezugszeichen und dieselben Begriffe für die einzelnen Teile der Vorrichtung verwendet wie in der *DE 198 33 672 A1.* Die bekannte Vorrichtung gemäß den FIG 3 und 4 ist zum Bewegen eines Außenrückblickspiegels für Kraftfahrzeuge vorgesehen und in der *DE 198 33 672 A1 als* Antrieb 1 bezeichnet. Der bekannte Antrieb 1 umfaßt ein Antriebsgehäuse 4, das zu einem Spiegelkopf 3 gehört, einen Spiegelfuß 2, der ein Rohr 20 als Teil eines Gelenkes aufweist und fest mit der Karosserie des Kraftfahrzeuges verbunden ist, ein Zahnrad 6, eine Welle 21 mit einem Schneckenrad 12 und einer Schnecke 11 sowie eine Druckfeder 8.

Das Rohr 20 des Spiegelfußes 2 ist durch den zylindrischen Hohlraum im Innern des Zahnrades 6 geführt. Von unten ist auf das, vorzugsweise aus einem Zinkgußteil gebildete, Antriebsgehäuse 4 ein Gehäuseverschluß 5 aus Kunststoff aufgeclipst über mehrere miteinander korrespondierende Rastösen 13 am Gehäuseverschluß 5 und Rastnasen 14 am Antriebsgehäuse 4.

Das Zahnrad 6 weist in einem oberen Bereich einen Zahnkranz (eine Verzahnung) auf, der mit der Schnecke 11 der Welle 21 in Eingriff bringbar oder gebracht ist. Über das Schnekkenrad 12 wird die Welle 21 von einem in FIG 3 nicht sichtbaren, innerhalb des Antriebsgehäuses 4 angeordneten, elektrischen Motor 39 über eine ebenfalls nicht sichtbare Motorschnecke an der Motorachse angetrieben.

Auf dem Gehäuseverschluß 5 ist das Zahnrad 6 an seiner unteren Stirnseite mit einem ringförmigen Ansatz 27 abgestützt und gleitend gelagert. An seiner unteren Stirnseite weist das Zahnrad 6 ferner drei Rastausnehmungen auf, die unter einem Winkel von 120 ° zueinander angeordnet sind und von denen nur zwei Rastausnehmungen 18a und 18b dargestellt sind. Der Spiegelfuß 2 weist an seiner dem Zahnrad 6 zugewandten Oberseite drei Rastnocken auf, von denen zwei Rastnocken 16a und 16b in FIG 3 zu sehen sind. Die Rastnocken 16a und 16b sowie der weitere nicht dargestellte Rastnocken sind mit den Rastausnehmungen 18a und 18b bzw. der weiteren nicht dargestellten Rastausnehmung am Zahnrad 6 in Eingriff bringbar. In der verrasteten Stellung, bei der die Rastnocken 16a, 16b in den Rastausnehmungen 18a, 18b verrastet sind, ist das Zahnrad 6 relativ zum Spiegelfuß 2 ortsfest und kann somit nicht mehr gedreht werden. Bei einem Antrieb der Antriebswelle 21 über den Antriebsmotor 39 wird deshalb das Antriebsgehäuse 4 mitsamt dem Spiegelkopf 3 und den daran befindlichen Komponenten gedreht, so daß eine Abklappbewegung des Spiegelkopfes 3 erreicht werden kann.

Im Ringraum zwischen dem Zahnrad 6 und dem am Spiegelfuß 2 festen Rohr 20 ist ein Klappwegbegrenzer 17 angeordnet. In dem nicht vom Klappwegbegrenzer 17 beanspruchten Ringraum zwischen dem Rohr 20 und dem Zahnrad 6 ist ferner zur besseren Führung eine nach unten von der Gehäusedecke 48 des Antriebsgehäuses 4 nach unten ragende zylindrische Hülse 30 als zweites Gelenkteil vorgesehen.

Von oben ist in den Ringraum zwischen der Hülse 30 und dem Zahnrad 6 einerseits sowie auf die Stirnseite des Zahnrades 6 zwischen dem Zahnrad 6 und der Gehäusedecke 48 andererseits ein im Querschnitt L-förmiger Gleitring 7 angeordnet. Durch die Hülse 30 und den Gleitring 7 werden sowohl das Rohr 20 des Spiegelfußes 2 als auch das Zahnrades 6 radial, d. h. senkrecht zur Drehachse 44, gelagert. Das Zahnrad 6 gleitet somit an der Oberseite über den Gleitring 7 an der Gehäusedecke 48 und unten über den ringförmigen Ansatz 27 auf dem Gehäuseverschluß 5.

Das Zahnrad 6 ist somit innerhalb des Antriebsgehäuses 4 mit dem Gehäuseverschluß 5 im wesentlichen spielfrei und ortsfest relativ zur Antriebsschnecke 11 gelagert und im Normalfall auch an seiner Unterseite mit dem Spiegelfuß 2 verrastet, so daß der Spiegelkopf 3 relativ zum Spiegelfuß 2 durch den Antriebsmotor 39 gedreht werden kann.

Bei besonderer Beanspruchung und Schlageinwirkung von außen soll nun jedoch zum Schutz des Getriebes und des Motors 39 ein Ausrasten des Zahnrades 6 relativ zum Spiegelfuß 2 möglich sein. Das durch die Hülse 30 und die Öffnung 47 in der Gehäusedecke 48 durchgeführte Rohr 20 des Spiegelfußes 2 ist deshalb an seinem nach oben ragenden Ende mit einer Sperrscheibe 10 versehen, die eine Druckfeder 8 unter einer elastischen Vorspannung hält. Die Druckfeder 8 ist zwischen zwei Scheiben 9a und 9b eingespannt und umgibt das Rohr 20. Über die obere Scheibe 9a drückt die Druckfeder 8 gegen die Sperrscheibe 10 und übt somit eine nach oben axial zur Drehachse 44 gerichtete Federkraft auf den Spiegelfuß 2 aus. Nach unten ist die Druckfeder 8 über die untere Scheibe 9b auf der Gehäusedecke 48 des Antriebsgehäuses 4 abgestützt. Dabei übt die Druckfeder 8 auf die Abstützfläche 49 der Scheibe 9b einen nach unten axial zur Drehachse 44 gerichtete Federkraft auf das Antriebsgehäuse 4 aus. Da das Zahnrad 6 ortsfest im Antriebsgehäuse 4 gelagert ist, werden somit durch die Druckfeder 8 die Rastnocken 16a, 16b des Spiegelfußes 2 bei der richtigen Winkelstellung in die Rastausnehmungen 18a, 18b des Zahnrades 6 hineingedrückt und somit das Zahnrad 6 und der Spiegelfuß 2 miteinander verrastet und in der verrasteten Stellung gehalten.

Nun weisen die Rastnocken 16a und 16b sowie die Rastausnehmungen 18a und 18b in der verrasteten Stellung aneinander anliegende schräge Flächen 23 bzw. 22 auf. Ferner sind am Spiegelfuß 2 in zu den Rastnocken 16a und 16b verschiedene Winkelpositionen Anschlagnocken 15a und 15b vorgesehen, die ebenfalls schräge Flächen 29 aufweisen, die an entsprechenden schrägen Flächen 28 von Gegenanschlägen 19a und 19b des Spiegelkopfes 3 zur Anlage kommen. Die Steigung der schrägen Anschlagflächen 28 und 29 entspricht im wesentlichen der Steigung der schrägen Rastflächen 22 und 23 am Zahnrad 6 und am Spiegelfuß 2.

Die Steigung der schrägen Flächen ist dabei so gewählt, daß die Federkraft der Druckfeder 8 vom Antriebsmotor 39 nicht überwunden werden kann, wohl aber von einer von außen auf den Spiegelkopf 3 einwirkenden Kraft, z. B. einem Stoß gegen ein Hindernis. In einer solchen Situation gleitet das Zahnrad 6 mit seinen Flächen 38, die zwischen den Rastausnehmungen 18a, 18b liegen, auf den Rastnocken 16a, 16b auf, wodurch ein höchstes Niveau des Spiegelkopfes 3 gegenüber dem Spiegelfuß 2 erreicht wird. Zwischen dem Spiegelkopf 3 und dem Spiegelfuß 2 bleibt ein Luftspalt. Aufgrund der Reibungsverhältnisse zwischen den Flächen 38 am Zahnrad 6 und den oberen Flächen an den Rastnocken 16a, 16b des Spiegelfußes 2 und zwischen dem Zahnrad 6 und dem Gleitring 7 bewegt sich bei motorischem Betrieb in dieser Position der Spiegelkopf 3 gegenüber dem Spiegelfuß 2, bis einer der Klappwegbegrenzer 17 erreicht ist. Dort stützt sich der Spiegelkopf 3 gegenüber dem Spiegelfuß 2 ab. Am Klappwegbegrenzer bewegt sich das Zahnrad 6 gegenüber dem Spiegelfuß 2, bis die Rastausnehmungen 18a, 18b in die Rastnocken 16a, 16b rasten. Der Spiegelkopf 3 kann jedoch gegenüber dem Spiegelfuß 2 bis zu einer Mittelstellung abgesenkt werden, weil dann der Spiegelkopf 3 mit seinen Gegenanschlägen 19a, 19b auf den Anschlagnocken 15a, 15b des Spiegelfußes 2 aufliegt. Der Neigungswinkel von Bereichen der Rastnocken 16a, 16b, die den schrägen Flächen 23 gegenüberliegen, ist nun so gewählt, daß er vom Antriebsmotor überwunden werden kann, wenn der Spiegelkopf 3 gegen den Klappwegbegrenzer 17 fährt. Die Ausrastkraft zwischen dem Zahnrad 6 und den Rastnokken 16a, 16b ist jedoch größer als die Reibung zwischen Spiegelfuß 2 und Spiegelkopf 3.

Dadurch wird infolge des Klappwegbegrenzers ein Anschlagen des Spiegels an die Karosserie des Kraftfahrzeuges verhindert, nach einer Schlageinwirkung automatisch vom Motor die richtige Raststellung vom Zahnrad 6 zum Spiegelfuß 2 wieder gefunden und ein Blokkieren oder Beschädigen des Motors oder des Getriebes bei einer Schlageinwirkung verhindert. Der Klappwegbegrenzer 17 wirkt dabei mit einem nicht dargestellten Fortsatz an der Hülse 30 des Gehäuses 4 zusammen, die bei einer bestimmten Winkelstellung aneinanderschlagen.

Das dargestellte Zahnrad 6 weist eine Geradverzahnung auf. Die Welle 21 ist um den Steigungswinkel der Schnecke 11 geneigt, so daß die Schnecke 11 gerade in Eingriff mit den Zähnen des Zahnrades 6 ist. Der Schrägverzahnungswinkel des Schneckenrades 12 ist geringer als der Steigungswinkel der nicht dargestellten Motorschnecke. Das Schneckenrad 12 kann aber auch geradverzahnt sein.

Bei dem bekannten Antriebssystem gemäß FIG 3 und FIG 4 gleitet die Druckfeder 8 bei der Drehbewegung des Antriebsgehäuses 4 mit dem Motor 39 um das Zahnrad 6 und um den Spiegelfuß 2 auf der Abstützfläche 29 der Gleitscheibe 9b und/oder die Gleitscheibe 9b auf der Gehäusedecke 48 und/oder die Druckfeder 8 auf der Abstützfläche 50 der Gleitscheibe 9a und/oder die Gleitscheibe 9a an der Sperrscheibe 10. In allen genannten Fällen (Alternativen) und Kombinationen daraus entstehen wegen der durch die Druckfeder 8 ausgeübten beträchtlichen Federkraft Gleitreibungsverluste. Infolge dieser Gleitreibungsverluste muß der Antriebsmotor 39 größer ausgelegt oder mit einer höheren elektrischen Leistung versorgt werden.

Die Erfindung beseitigt dieses Problem der Gleitreibungsverluste durch eine verblüffend einfache und sehr wirkungsvolle Maßnahme, die nachfolgend näher beschrieben wird.

Gemäß der Erfindung wird nämlich bei dem bekannten Antriebssystem gemäß den FIG 3 und 4 die Gehäusedecke 48 zumindest in dem Bereich, in dem die Druckfeder 8 sich abstützt, entfernt. Das Antriebsgehäuse 4 weist also in diesem Bereich eine entsprechende Aussparung auf oder entfällt sogar ganz. Dadurch übt die Druckfeder 8 die Federkraft unmittelbar auf das darunterliegende Zahnrad 6 aus, wobei eine der Gleitscheiben 7 und 9b oder auch beide entfallen können. Im normalen Betrieb mit dem motorischen Antrieb findet nämlich nun keine Relativbewegung der Druckfeder 8 mit einem sich drehenden Teil statt, sondern die Druckfeder 8 bleibt im wesentlichen ortsfest zu dem Zahnrad 6 und dem mit dem Zahnrad 6 verrasteten Spiegelfuß 2. Die Rückstellkraft des Federelements 8 ist dabei so groß bemessen, daß das Federelement 8 in der gekoppelten Stellung von Antriebsteil 2 und Getriebeteil 6 bei einer Relativdrehung von Antriebsgetriebe 11 und Getriebeteil 6 ortsfest zum Getriebeteil 6 ist.

Somit tritt zwischen der Druckfeder 8 und der oberen Scheibe 9a und am entgegengesetzten Ende der Gleitscheibe 9b bzw. dem Gleitring 7 bzw. dem Zahnrad 6 keine Gleitreibung mehr auf. Die Druckfeder 8, die nur zum Halten des Zahnrades 6 in der verrasteten Stellung am Spiegelfuß 2 vorgesehen ist, erzeugt somit keine Gleitreibungsverluste mehr bei der Drehung des Spiegelkopfes 3 mit dem Antriebsgehäuse 4 relativ zum Spiegelfuß 2 mit dem verrasteten Zahnrad 6.

Da nun über das Zahnrad 6 die Federkraft der Druckfeder 8 unmittelbar auf den Gehäuseverschluß 5 am Ansatz 27 wirkt, wird der Gehäuseverschluß 5 vorzugsweise aus einem Metall oder einem stabilen, z. B. faserverstärkten, Kunststoff gebildet und insbesondere auch mit einer stabilen Rast- oder Schnappverbindung oder einer Schraubverbindung mit dem Antriebsgehäuse 4 verbunden, das nun aus Kunststoff bestehen kann. Antriebsgehäuse 4 und Gehäuseverschluß 5 können aber auch einstückig ausgebildet sein, insbesondere als zusammenhängendes Formteil.

Wie auch unmittelbar aus FIG 3 und FIG 4 zu erkennen ist, können durch das Weglassen der Gehäusedecke 48 nicht nur das Antriebsgehäuse 4 einfacher und mit weniger Material gestaltet werden, sondern auch zusätzliche Teile, wie die Gleitscheibe 9b und der Gleitring 7, entfallen. Der Aufbau wird somit auch konstruktiv vereinfacht.

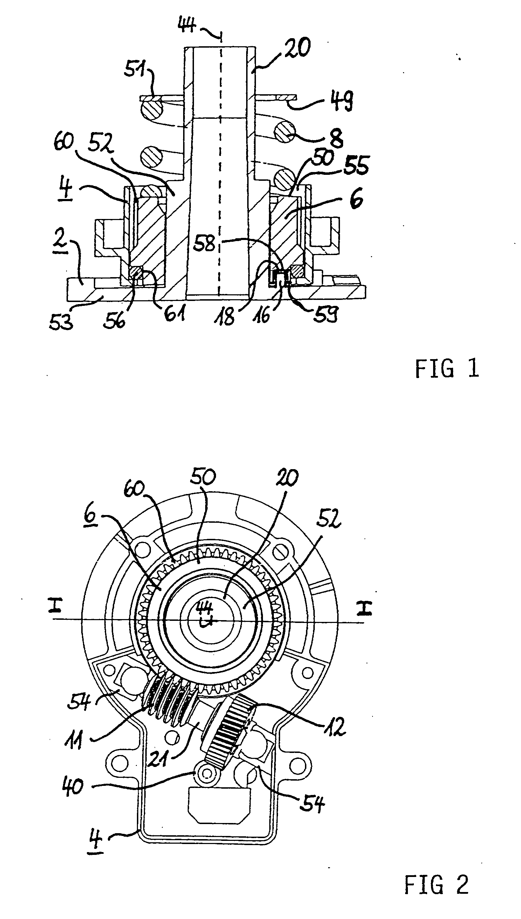

Die FIG 1 und 2 zeigen nun ein besonders vorteilhaftes Ausführungsbeispiel der Vorrichtung zum Bewegen eines Körpers gemäß der Erfindung. Das Ausführungsbeispiel betrifft wieder eine Vorrichtung zum Bewegen, insbesondere Abklappen, eines Fahrzeugspiegels, ist aber nicht auf diese Anwendung beschränkt, sondern kann zum Antrieb eines beliebigen Körpers verwendet werden. Es werden deshalb hinter die speziellen Begriffe für die einzelnen dargestellten Teile in der Anwendung als Spiegelantrieb allgemeinere Begriffe in Klammern dahintergesetzt, um die allgemeine Anwendbarkeit der Erfindung zu verdeutlichen.

In der nach der Erfindung ausgebildeten Ausführungsform eines Fahrzeugspiegelantriebs (einer Vorrichtung zum Bewegen eines Körpers) gemäß den FIG 1 und 2 sind ein Zahnrad (Getriebeteil) mit 6, ein Spiegelfuß (Antriebsteil) mit 2, ein Antriebsgehäuse (Lagereinrichtung) mit 4, eine Druckfeder (Federelement, Federeinrichtung, Rückstelleinrichtung) mit 8, ein Rohr (Hohlschaft, Schaft) mit 20, ein Rastnocken (Vorsprung, Fortsatz, Kopplungselement) mit 16, eine Rastausnehmung (Ausnehmung, Öffnung, korrespondierendes Kopplungselement) mit 18, ein Lagerbereich am Zahnrad 6 mit 61, ein dem Lagerbereich 61 zugeordnetes Kugellager mit 56, ein Sockelteil des Spiegelfußes 2 mit 52, ein Bodenteil des Spiegelfußes 2 mit 53, eine Öffnung im Antriebsgehäuse 4 mit 55, eine Drehachse mit 44, ein Abstützteil am Spiegelfuß 2 mit 51, eine Abstützfläche am Abstützteil 51 für die Druckfeder 8 mit 49, eine weitere Abstützfläche für die Druckfeder 8 am Zahnrad 6 mit 50 und eine Verzahnung des Zahnrades 6 mit 60 bezeichnet.

Die FIG 1 ist eine Schnittdarstellung entlang der in FIG 2 mit I - I bezeichneten Schnittebene. In FIG 2 sind ferner eine Schnecke (Getriebeschnecke) mit 11 und ein über die Welle 21 mit der Schnecke 11 verbundenes Schneckenrad (Getrieberad) mit 12 sowie zwei Halterungen für das mit der Schnecke 11, der Welle 21 und dem Schneckenrad 12 gebildete Antriebsgetriebe mit 54 sowie eine Motorschnecke (Motorgetriebe) des nicht dargestellten Elektromotors mit 40 bezeichnet.

Das Zahnrad 6 ist im Antriebsgehäuse 4 über das Kugellager 56 oder eine andere Lagerung, beispielsweise ein Rollenlager oder ein Gleitlager, um die Drehachse 44 drehbar gelagert. Die Druckfeder ist zwischen die Abstützfläche 49 am Abstützteil 51 des Spiegelfußes 2 einerseits und die als weitere Abstützfläche 50 dienende obere Stirnfläche des Zahnrades 6 andererseits unter elastischer Verformung eingespannt. Aufgrund der elastischen Rückstellkräfte der Druckfeder 8 wirkt zwischen dem Bodenteil 53 des Spiegelfußes 2 und der von der Abstützfläche 50 abgewandten Stirnseite des Zahnrades 6 eine Zugkraft, die die beiden Bereiche aufeinander zu zieht. Dadurch bleibt der in die Rastausnehmung 18 im Zahnrad 6 an dessen unterer Stirnseite hineinragende Rastnocken 16 am Bodenteil 53 des Spiegelfußes 2 mit der Rastausnehmung 18 in Eingriff, so daß eine mechanische Kopplung zwischen dem Zahnrad 6 und dem Spiegelfuß 2 erreicht und erhalten wird. Die einander zugewandten Kopplungsbereiche mit den rastend in Eingriff bringbaren Kopplungselementen (16 und 18) sind am Spiegelfuß 2 mit 59 und am Zahnrad 6 mit 58 bezeichnet.

Die Kopplung wirkt im wesentlichen in Umfangsrichtung bezogen auf die Drehachse 44, so daß der Spiegelfuß 2 gegenüber dem Getrieberad 6 nicht unabhängig bewegt werden kann, sondern beide Teile 2 und 6 sich nur synchron miteinander bewegen können. Die Kopplung der Kopplungbereiche 58 und 59 des Zahnrades 6 und des Spiegelfußes 2 über die Kopplungselemente (16 und 18) kann dadurch aufgehoben werden, daß die Druckfeder 8 durch eine Bewegung des Abstützteiles 51 bzw. des Spiegelfußes 2 nach unten zusammengedrückt wird und dadurch sich die Kopplungselemente (16 und 18) voneinander lösen können. Die dafür erforderliche Kraft ist nun so bemessen, daß sie beim normalen elektromotorischen Antrieb nicht erreicht wird, sondern nur im Falle einer wesentlich größeren äußeren Krafteinwirkung auf den Spiegelkopf, der mit dem Antriebsgehäuse 4 verbunden ist.

Die Abstützfläche 50 am Zahnrad 6 kann insbesondere auch ringförmig vertieft sein, um einen besseren Halt der Druckfeder 8 auf der Abstützfläche 50 zu erreichen. Das Abstützteil 51 ist vorzugsweise an dem Schaft 20 des Spiegelfußes 2 ausgebildet oder an diesem befestigt. Das Zahnrad 6 liegt mit seiner zylindrischen Innenwandung an der Außenseite des ebenfalls zylindrischen Sockelteils 52 des Spiegelfußes 2 an oder ist von diesem leicht beabstandet. Die radiale Lagerung des Zahnrades 6 geschieht durch das Kugellager 56 an dem Antriebsgehäuse 4.

Anstelle eines Zahnrades 6 kann in allen Ausführungsformen auch ein anderes Getriebeteil vorgesehen sein, beispielsweise ein Schneckengetriebe. Auch die Antriebsgetriebeteile 11, 21 und 12 sowie 40, die die vom Motor erzeugte Kraft auf das Getriebeteil 6 übertragen, können mit anderen bekannten Getriebekomponenten gebildet werden, beispielsweise mit Zahnriemen- oder Zahnkettengetrieben oder mit Planetengetrieben mit wenigstens einem weiteren Stirnzahnrad oder auch anderen bekannten Getriebeteilen.

Die Druckfeder 8 ist in der dargestellten Ausführungsform eine zylindrische Schraubendruckfeder, die aus einem wendelförmig gewundenen Draht mit rundem Querschnitt gebildet ist. Es kann natürlich auch ein flacher oder rechteckiger Querschnitt für den Draht verwendet werden oder auch eine räumliche Spiralform anstelle einer zylindrischen Gestalt. Die Enden der Druckfeder 8 werden vorzugsweise eben gestaltet, damit die Enden der Druckfeder 8 flächig auf den Abstützflächen 49 und 50 aufliegen. Dazu kann der Draht an den Enden der Druckfeder 8 angelegt und/oder plan geschliffen und/oder eingerollt sein.

Anstelle des gezeigten Ausführungsbeispieles einer Druckfeder 8 können in weiteren Ausführungsformen gemäß der Erfindung auch andere bekannte Druckfedern verwendet werden oder andere, insbesondere pneumatische oder hydraulische, Druckaktoren. Entscheidend ist die Funktion der Druckfeder 8 oder einer äquivalenten Komponente, daß das Zahnrad 6 und der Spiegelfuß 2 im Normalbetrieb in ihrer verrasteten Stellung gehalten werden.

### Bezugszeichenliste

- 1: Antrieb
- 2: Spiegelfuß
- 3: Spiegelkopf
- 4: Antriebsgehäuse
- 5: Gehäuseverschluß
- 6: Zahnrad
- 7: Gleitring
- 8: Druckfeder
- 9a, 9b: Scheiben
- 10: Sperrscheibe
- 11: Schnecke
- 12: Schneckenrad
- 13: Rastösen
- 14: Rastnasen
- 15a, 15b: Anschlagnocken
- 16: Rastnocken
- 16a, 16b, 16c: Rastnocken
- 17: Klappwegbegrenzer
- 18: Rastausnehmung
- 18a, 18b, 18c: Rastausnehmungen
- 19a, 19b: Gegenanschläge
- 20: Rohr
- 21: Welle
- 22: schräge Flächen am Zahnrad (Raste)
- 23: schräge Flächen am Spiegelfuß (Raste)
- 24: Luftspalt
- 25: Luftspalt
- 26: Luftspalt
- 27: Ansatz
- 28: schräge Flächen am Spiegelkopf (Anschlag)
- 29: schräge Flächen am Spiegelfuß (Anschlag)
- 30: Hülse
- 34a, 34b: Nuten/Ausnehmungen im Spiegelkopf
- 38: Flächen zwischen den Rastausnehmungen (Zahnrad)
- 39: Motor
- 44: Drehachse
- 47: Öffnung
- 48: Gehäusedecke
- 49: Abstützbereich
- 50: Abstützbereich
- 51: Abstützteil
- 52: Sockelteil
- 53: Bodenteil
- 54: Halterung
- 55: Öffnung
- 56: Kugellager
- 58, 59: Kopplungsbereich
- 60: Verzahnung
- 61: Lagerbereich

## Patentansprüche

1. Vorrichtung (1) zum Bewegen eines Körpers, insbesondere eines Fahrzeugteils und vorzugsweise eines Fahrzeugspiegels, umfassend
a) ein Antriebsteil (2),
b) ein Getriebeteil (6) und
c) wenigstens ein Federelement (8),
wobei
d) das Getriebeteil an ein Antriebsgetriebe (11) angekoppelt oder ankoppelbar ist, und das Getriebeteil und das Antriebsgetriebe im angekoppelten Zustand relativ zueinander um eine Drehachse (44) drehbar sind,
e) das Getriebeteil und das Antriebsteil in einer gekoppelten Stellung mechanisch derart gekoppelt sind, daß das Antriebsteil ortsfest zum Getriebeteil ist, und in einer entkoppelten Stellung mechanisch entkoppelt sind,
und
f) das Federelement auf einem Abstützbereich (50) des Getriebeteils oder auf einem sich auf dem Getriebeteil abstützenden Abstützkörper (7) abgestützt ist und eine Rückstellkraft auf das Getriebeteil ausübt, die das Getriebeteil und das Antriebsteil in die gekoppelte Stellung drückt.

2. Vorrichtung nach Anspruch 1, bei der
a) das Antriebsteil einen Kopplungsbereich (59) und einen Abstützbereich (49) aufweist,
b) das Getriebeteil einen an das Antriebsgetriebe angekoppelten oder ankoppelbaren Getriebebereich (60) und einen Kopplungsbereich (58) aufweist,
c) das Federelement auf dem Abstützbereich des Antriebsteils einerseits und auf dem Abstützbereich des Getriebeteils oder des Abstützkörpers andererseits abgestützt ist und eine axial zur Drehachse gerichtete Rückstellkraft auf beide Abstützbereiche ausübt,
d) das Getriebeteil und das Antriebsteil relativ zueinander axial zur Drehachse verschiebbar sind und die Kopplungsbereiche von Getriebeteil und Antriebsteil in der gekoppelten Stellung mechanisch gekoppelt sind und in der entkoppelten Stellung, die von der gekoppelten Stellung durch eine axial, zur Drehachse gerichtete Relativbewegung der Kopplungsbereiche voneinander weg erreicht wird, entkoppelt sind.

3. Vorrichtung nach Anspruch 1 oder Anspruch 2, bei der Antriebsteil und Getriebeteil axial in Eingriff bringbare und lösbare Kopplungsmittel (16, 18) aufweisen.

4. Vorrichtung nach Anspruch 3, bei der die Kopplungsmittel (16, 18) eine formschlüssige und/oder kraftschlüssige Kopplung von Antriebsteil und Getriebeteil bewirken.

5. Vorrichtung nach Anspruch 3 oder Anspruch 4, bei der die Kopplungsmittel wenigstens einen Vorsprung oder Fortsatz (16) und wenigstens eine korrespondierende Ausnehmung (18) oder Öffnung umfassen.

6. Vorrichtung nach einem der vorherigen Ansprüche, bei der das Federelement an oder auf dem Antriebsteil radial gelagert ist.

7. Vorrichtung nach einem der vorherigen Ansprüche, bei der das Federelement eine Schrauben- oder Spiralfeder, insbesondere eine zylindrische Schrauben- oder Spiralfeder ist.

8. Vorrichtung nach einem der vorherigen Ansprüche, bei der die Rückstellkraft des Federelements so groß bemessen ist, daß das Federelement in der gekoppelten Stellung von Antriebsteil und Getriebeteil im wesentlichen ortsfest zum Getriebeteil ist, so daß zwischen der Abstützfläche und dem Federelement praktisch keine Gleitreibung stattfindet.

9. Vorrichtung nach einem der vorherigen Ansprüche mit einer Lagereinrichtung (14), in der das Getriebeteil gelagert ist.

10. Vorrichtung nach Anspruch 9, bei der die Lagereinrichtung, vorzugsweise radial zur Drehachse außerhalb des Getriebeteils angeordnete, Radiallager (56) für das Getriebeteil aufweist.

11. Vorrichtung nach Anspruch 9 oder Anspruch 10, bei der die Lagereinrichtung wenigstens ein Drehlager (56) für das Getriebeteil aufweist, vorzugsweise wenigstens ein Kugellager oder Rollenlager oder Gleitlager, so daß die Lagereinrichtung und das Getriebeteil relativ zueinander um die Drehachse drehbar sind, und bei der das Antriebsgetriebe ortsfest an oder in der Lagereinrichtung angeordnet ist.

12. Vorrichtung nach Anspruch 11, bei der das Drehlager (56) die axiale Bewegung des Getriebeteils zum Antriebsteil bei der gekoppelten Stellung begrenzt.

13. Vorrichtung nach einem der Ansprüche 9 bis 12, bei der die Lagereinrichtung ein das Getriebeteil um die Drehachse umgebendes Gehäuse, beispielsweise aus Kunststoff, aufweist, das axial an beiden Stirnseiten wenigstens teilweise offen ist, so daß das Getriebeteil zur Kopplung für das Antriebsteil und im Abstützbereich für das Federelement zugänglich ist.

14. Vorrichtung nach einem der Ansprüche 9 bis 13, bei der auch das Antriebsteil in der Lagereinrichtung gelagert ist.

15. Vorrichtung nach einem der vorherigen Ansprüche mit einem Antriebsgetriebe (11), das an den Getriebebereich des Getriebeteils gekoppelt ist oder koppelbar ist.

16. Vorrichtung nach Anspruch 15 mit einem Antriebsmotor zum Antreiben des Antriebsgetriebes.

17. Vorrichtung nach einem der Ansprüche 9 bis 14 und nach Anspruch 15 oder Anspruch 16, bei der die Lagereinrichtung auch das Antriebsgetriebe bzw. den Antriebsmotor trägt.

18. Vorrichtung nach einem der vorherigen Ansprüche, bei der das Getriebeteil ein Getrieberad (6) oder eine Getriebewalze oder eine Getriebeschnecke ist.

19. Vorrichtung nach einem der vorherigen Ansprüche, bei der das Getriebeteil mehrere Getriebenocken oder Getriebezähne aufweist.

20. Vorrichtung nach einem der Ansprüche 1 bis 19, bei der der zu bewegende Körper mit dem Antriebsgehäuse bzw. der Lagereinrichtung ortsfest verbunden oder verbindbar ist.

21. Vorrichtung nach einem der Ansprüche 1 bis 19, bei der der zu bewegende Körper mit dem Antriebsteil ortsfest verbunden oder verbindbar ist.

22. Fahrzeugspiegelsystem mit
a) einem Fahrzeugspiegel
b) einer Vorrichtung (1) nach einem der vorhergehenden Ansprüche zum Bewegen, insbesondere Abklappen, des Fahrzeugspiegels.

23. Fahrzeugspiegelsystem nach Anspruch 22, bei dem das Antriebsteil Teil des Fahrzeugspiegels ist oder mit diesem verbunden ist.

24. Fahrzeugspiegelsystem nach Anspruch 22, bei dem das Antriebsgetriebe bzw. die Lagereinrichtung Teil des Fahrzeugspiegels ist oder mit diesem verbunden ist.

25. Fahrzeugspiegelsystem nach einem der Ansprüche 22 bis 24, bei dem Antriebsteil und Getriebeteil bei einer automatischen Verstellung des Fahrzeugspiegels in der gekoppelten Stellung sind und bei einer vorgegebenen Kraft- oder Stoßeinwirkung von außen auf den Fahrzeugspiegel in die entkoppelte Stellung übergehen.
